# EUROPÄISCHE PATENTANMELDUNG

(11) **EP 0 590 356 A1**
(43) Veröffentlichungstag der Anmeldung: **06.04.1994**
(21) Anmeldenummer: 93114236.8
(22) Anmeldetag: 06.09.1993
(51) Int. Cl.: H01M 2/12, H01M 10/52

(54) **Mehrzelliger Blei/Säure-Akkumulator**

(30) Priorität: 01.10.1992 DE 4232960
(71) Anmelder: VB Autobatterie GmbH, D-30419 Hannover (DE)
(72) Erfinder: Höcker, Jürgen, Dr., D-31675 Bückeburg (DE); Schulze, Klaus, Dr., D-30419 Hannover (DE); Bauer, Jürgen, Dr., D-31141 Hildesheim (DE)
(74) Vertreter: Kaiser, Dieter Ralf, Dipl.-Ing.

(57) **Zusammenfassung**

Zur Schadensbegrenzung im Explosionsfalle, ausgelöst durch Innenzündung der Akkumulatorengase, ist der Gehäusedeckel einer Akkumulatorenbatterie auf seiner Unterseite mit einer oder mehreren Lagen eines Faservlieses beschichtet, welches teilhydrophobiert ist und bei hoher Feinheit der Fasern (Dicke: 10-100µm; 1,5-40dtex) ein Flächengewicht von 120 bis 350g/m² aufweist. Die Vliesmatte fängt die Explosionsdruckwelle federnd auf und leitet zugleich aufgrund ihrer Teilbenetzbarkeit den mit der Druckerhöhung einhergehenden Wärmestau ab. Zur Montage kann die vorzugweise aus PP-Fasern bestehende Matte entsprechend der Deckelinnenkontur vorgestanzt, großflächig verklebt und Zellentrennwände übergreifend in die Spiegelverschweißung von Deckel und Gehäuse mit einbezogen werden.

## Beschreibung

Die Erfindung betrifft einen mehrzelligen, mit flüssigem Elektrolyten beschickten Blei/Säure-Akkumulator mit einem Blockkastengehäuse, einem Blockdeckel, einer oder mehreren Trennwänden, welche den Raum innerhalb des Behälters und des Deckels in zwei oder mehrere Zellen unterteilen und einer mittels Flammschutzfritte explosionsgeschützten Entlüftungseinrichtung.

Gewöhnlich besitzen Blei/Säure-Akkumulatoren einen rechteckigen, als Blockkasten bezeichneten Behälter und eine Deckelanordnung, wobei beide Teile aus einem thermoplastischen Kunststoff wie etwa Polypropylen bestehen und im Spritzgußverfahren hergestellt sind.

Der Innenraum des Behälters ist im allgemeinen mittels Trennwänden in Zellen unterteilt, und jede Zelle ist weitgehend isoliert. Innerhalb jeder Zelle sind Elektrodenstapel untergebracht und elektrisch in Serie miteinander verbunden. Außerdem ist jede Zelle mit Elektrolyt gefüllt, und zwar bis zu einer Höhe, bei der auch die Oberseite des Elektrodenstapels in den Elektrolyt eintaucht.

Beim Laden erzeugen derartige Akkumulatoren Gase, hauptsächlich Wasserstoff und Sauerstoff, die gegen Ende des Ladevorganges in der stöchiometrischen Zusammensetzung des Knallgases in einem weiten Konzentrationsbereich ein explosionsfähiges Gemisch bilden.

Bei einer Explosion des Gemisches wird nicht nur die Batterie zerstört, sondern auch ihre Umgebung in Mitleidenschaft gezogen, d.h. es können Menschen durch umherfliegende Bruchstücke aus Polypropylen verletzt werden oder, bei Kraftfahrzeugbatterien, Schäden im Motorraum angerichtet werden.

Als Auslöser für eine Explosion der Akkumulatorengase kommen sowohl äußere wie innere Zündquellen in Betracht.

Einer Zündung von außen, die durch einen Funken oder elektrostatischen Funkenüberschlag verursacht wird, kann man durch gezielte Sicherheitsmaßnahmen vorbeugen.

Eine bewährte Lösung besteht in einem Entlüftungssystem, bei welchem die Zellengase zunächst durch häufiges Umlenken an Prallflächen und in Labyrinthkammern von mitgeschleppten Feuchtigkeitsnebeln befreit und dann über eine zentrale Sammelleitung möglichst einer einzigen Ausströmöffnung im Deckelbereich zugeführt werden, die durch einen porösen Körper, z.B. eine Fritte aus gesintertem Kunststoff oder einer Keramik, verschlossen ist. Der poröse Körper verhindert die Fortpflanzung einer Stichflamme von außen nach innen und stellt damit einen Rückzündschutz dar.

Anders als wie bei den Außenzündungen entziehen sich die Ursachen für eine Innenzündung weitgehend einer Kontrolle. Die Innenzündung ist deshalb nicht beherrschbar. Sie kann verursacht werden durch eine elektrostatische Aufladung des Gehäuses. Die Ladung wird über einen Säurefilm in das Gehäuse hineintransportiert. Bei einer Unterbrechung des Säurefilms im Innern kann die damit entstandene Potentialdifferenz einen Funken auslösen, der zur Zündung des Knallgasgemisches in der Batterie führt.

Eine andere Ursache für die Entstehung eines Funkens im Batterieinnern kann in der Unterbrechung einer elektrischen Verbindung durch Korrosion oder in einer mechanischen Überbeanspruchung stromleitender Teile bestehen. Kommt es zu einer Trennung zwischen diesen, etwa durch Abkorrodieren einer Fahne oder Reißen eines Verbinders, findet bei Strombelastung der Batterie unvermeidbar ein Funkenüberschlag statt.

Es bleibt in diesem Fall nur übrig, wenigstens die Auswirkungen einer Explosion so zu mildern, daß kein größerer Schaden in der Umgebung, insbesondere an Personen, entsteht. So gehen bekannte Vorkehrungen gemäß US-PS 4751154 und US-PS 4859546 dahin, den gesamten, nach oben offenen Freiraum des Batteriebehälters mit einer Vielzahl kleiner Kissen, entweder aus Polypropylen-Wirrfasern oder aus Polyurethanschaum gebildet, in lockerer Packung auszupolstern, um auf diese Weise dank der Kompressibilitätseigenschaft einer solchen Anordnung die Wucht einer Explosion zu dämpfen.

Die Herstellung der Kissen-Elemente sowie ihre Plazierung und Festlegung in den vorgesehenen oberen Räumen zwischen den Zellentrennwänden ist jedoch umständlich.

Der Erfindung liegt die Aufgabe zugrunde, eine Maßnahme anzugeben, mit deren Hilfe die angestrebte Schadensbegrenzung auf weniger aufwendige Weise erreicht werden kann.

Die Aufgabe wird erfindungsgemäß durch einen Blei/Säure-Akkumulator gelöst, wie er im Patentanspruch 1 definiert ist.

Danach leistet eine Beschichtung der gesamten Unterseite des Batteriedeckels mit einer, ggfls. auch mehreren Matten aus einem heißgesinterten und gestreckten Fasermaterial, welches teilhydrophobiert ist, den notwendigen Schutz.

Die Faserstärke sollte erfindungsgemäß sehr gering sein und zwischen 10 und 100µm, vorzugweise zwischen 15 und 25µm liegen. Die Feinheit der Fasern (früher in Denier-Graden gemessen) sollte 1,5 bis 40dtex betragen, und es sollte sich dabei erfindungsgemäß ein Flächengewicht des Fasermaterials zwischen 120 bis 350g/m² ergeben.

Erfindungswesentlich ist jedoch seine Teilhydrophobierung, zu der man gelangt, indem man bei der Herstellung der Matten bzw. Faservliese hydrophobierte Fasern mit nicht hydrophobierten mischt. Hydrophobierte Fasern durchlaufen bereits bei Verspinnen ein hydrophobierendes Medium, z.B. eine PTFE-Dispersion, und können direkt im Handel bezogen werden.

Der Grad der Teilhydrophobierung der Matte ergibt sich aus dem Mischungsverhältnis zwischen hydrophobierten und nicht hydrophobierten Fasern.

Als Fasermaterial kommen sowohl reine Kunststoffasern aus Polypropylen, Polyethylen oder Polystyrol als auch Verbundfasern aus solchen Kunststoffen mit Glas-oder Metallfasern in Betracht.

Erfindungsgemäß geht nun von der Fasermatte im Explosionfalle eine Federwirkung aus, die sich durch Zusammdrücken der Fasern äußert. Zur Unterstützung der Federwirkung ist es günstig, die Vliesmatten mehrlagig zu applizieren und ggfls. auch Netzarmierungen in diese einzubeziehen.

Die Dicke der Matten bzw. die mit ihnen vorgenommene Beschichtung der Deckelunterseite sollte mindestens 7 bis 20mm betragen.

Durch den teilhydrophoben Zustand der Matten ist sichergestellt, daß sie vom Elektrolyten nur zu einem bestimmten Prozentsatz benetzbar sind. Dies hat den Effekt, daß sie einerseits als Ganzes die Explosionsdruckwelle auffangen, andererseits durch die Teilbenetzung des Vliesgewebes für eine Wärmeableitung der mit der Druckerhöhung einhergehenden Temperaturwelle sorgen.

Die Vliesmatte wird entsprechend den Deckelinnenkonturen vorgestanzt und dann mit automatischen Montageeinrichtungen auf die Deckelunterseite aufgebracht.

Ihre Befestigung kann u.a. mittels Fangkörbchen, besser jedoch mittels thermischer Verfahren wie Punktverschweißen erfolgen, wobei eine feste Verbindung zwischen Deckel und Vlies entsteht. Besonders vorteilhaft werden die Matten jedoch mittels Schmelzkleber großflächig mit der Deckelunterseite verklebt.

Bei mehrzelligen Akkumulatoren, insbesondere Starterbatterien, ist auch der Innenraum des Deckels durch Zwischenwände unterteilt, welche mit den Zellenzwischenräumen des Behälters korrespondieren und erst während des Spiegelverschweißens beider Teile durch Fusion vereinigt werden.

Für die erfindungsgemäße Installierung der Vliesmatten ist eine derartige Unterteilung der Deckelunterseite keineswegs hinderlich. Vielmehr ist eine sehr einfache Montage dadurch möglich, daß -bei einer 6-zelligen Batterie- alle 6 Vlieseinlagen in einem Arbeitsgang aus dem jeweiligen Material so vorgestanzt werden, daß sie durch schmale Zwischenstreifen untereinander verbunden bleiben. Nach Verbindung der Einlagen mit dem Deckel mittels einer der genannten Methoden wird die Batterie ohne weitere Vorkehrungen an den vorhandenen technischen Anlagen dem Spiegelschweißen wie üblich unterzogen, wobei die Zwischenstreifen mitverschweißt werden. In diesem Falle empfiehlt sich allerdings die Verwendung des gleichen Kunststoffmaterials für das Faservlies, aus dem auch Behälter und Deckel bestehen.

Zusätzliche Maßnahmen, mit denen die Brisanz einer Batterieexplosion gemildert werden kann, erstrecken sich auf den Deckel selbst. Hierbei sollte z.B. eine Polypropylensorte hoher Schlagfestigkeit, besonders in der Kälte, ausgewählt werden.

Wichtig ist auch, daß der Kunststoff eine der Verformungsenergie angepaßte Elastizität besitzt, damit die Energie der Explosionsdruckwelle in eine elastische Materialumformung umgesetzt wird.

Weitere Möglichkeiten liegen in der konstruktiven Einfügung von Verstärlungselementen in die Deckelschale, z.B. von Bandzügen, d.h. von Verstärkungsbändern in Form von senkrecht zur Deckelebene orientierten Leisten.

Schließlich können ein aus einem Verbundwerkstoff hergestellter Deckel (mehrere Schichten) oder eine Beschichtung des Deckels von der Oberseite mit einer elastischen Folie oder einem elastisch erstarrenden Auftrag, um Splitterwirkung weitgehend auszuschalten, die Maßnahme gemäß Erfindung nachhaltig unterstützen.

## Patentansprüche

1. Mehrzelliger, mit flüssigem Elektrolyten beschickter Blei/Säure-Akkumulator mit einem Blockkastengehäuse, einem Blockdeckel, einer oder mehreren Trennwänden, welche den Raum innerhalb des Behälters und des Deckels in zwei oder mehr Zellen unterteilen und einer mittels Flammschutzfritte explosionsgeschützten Entlüftungseinrichtung, dadurch gekennzeichnet, daß zum Auffangen einer durch Innenzündung ausgelösten Explosionsdruckwelle die gesamte Unterseite des Blockdeckels mit zumindest einer Matte aus heiß gesintertem gestreckten Fasermaterial, welches teilhydrophobiert ist, flächendeckend beschichtet ist.

2. Mehrzelliger Blei/Säure-Akkumulator nach Anspruch 1, dadurch gekennzeichnet, daß die Dicke der Fasern 10 bis 100µm, vorzugsweise 15 bis 25µm, beträgt.

3. Mehrzelliger Blei/Säure-Akkumulator nach den Ansprüchen 1 und 2, dadurch gekennzeichnet, daß bei einer Feinheit der Fasern von 1,5 bis 40dtex das Flächengewicht des Fasermaterials 120 bis 350g/m² beträgt.

4. Mehrzelliger Blei/Säure-Akkumulator nach einem der Ansprüche 1 bis 3, dadurch gekennzeichnet, daß das Fasermaterial ein Kunststoff, vorzugsweise Polypropylen ist.

5. Mehrzelliger Blei/Säure-Akkumulator nach einem der Ansprüche 1 bis 3, dadurch gekennzeichnet, daß das Fasermaterial aus Verbundfasern von Typ Kunststoff/Glas oder Kunststoff/Metall besteht.

6. Mehrzelliger Blei/Säure-Akkumulator nach einem der Ansprüche 1 bis 5, dadurch gekennzeichnet, daß die Fasermatte mittels Schmelzkleber mit der Deckelunterseite verbunden ist.

7. Mehrzelliger Blei/Säure-Akkumulator nach einem der Ansprüche 1 bis 5, dadurch gekennzeichnet, daß die Fasermatte mit der Deckelunterseite punktverschweißt ist.

8. Mehrzelliger Blei/Säure-Akkumulator nach einem der Ansprüche 1 bis 7, dadurch gekennzeichnet, daß die Matten-Beschichtung der Deckelunterseite eine Mindestdicke von 7 bis 20mm aufweist.
